# EUROPEAN PATENT SPECIFICATION

(11) **EP 2 686 547 B1**
(45) Date of publication and mention of the grant of the patent: **14.01.2015**
(21) Application number: 11712497.4
(22) Date of filing: 15.03.2011
(51) Int. Cl.: F03D 7/04, F03D 7/02

(54) **DOWNWIND TURBINE WITH FREE YAW SYSTEM**
LEELÄUFER MIT FREIEM GIERSYSTEM
TURBINE SOUS LE VENT ÉQUIPÉE D'UN SYSTÈME DE LACET LIBRE

(43) Date of publication of application: 22.01.2014
(73) Proprietor: XANT NV, 1000 Brussel (BE)
(72) Inventor: DE BROE, Alex, B-1730 Asse (BE); DUFFEY, Thomas, B-1000 Bruxelles (BE); PICOT, Natalie, B-9000 Gent (BE)
(74) Representative: Gyi, Jeffrey Ivan
(86) International application number: PCT/EP2011/053844
(87) International publication number: WO 2012/123019

(56) References cited:
- WO-A2-2007/011862
- DE-A1- 10 212 467
- US-A- 4 366 387
- US-A- 4 522 564
- US-A1- 2003 227 174

## Description

### FIELD OF THE INVENTION

The present invention is in the field of wind turbines. More in particular, it relates to devices and methods suitable for optimizing free yaw control of downwind turbines.

### BACKGROUND TO THE INVENTION

In general, wind turbines are optimized to maximize their power output over the complete wind speed operating range. In order to guarantee a proper and safe operation at all available wind speeds, several servo mechanisms are incorporated in the design as control mechanisms, such as the pitch control and the yaw control. In older turbines these mechanisms are mechanically or hydraulically actuated, while in the most recent designs they may be electro-mechanically operated, using electrical motors and gearboxes.

One such a control mechanism is the yaw control, which serves as a wind orientation mechanism. In upwind turbines such a mechanism orients the turbine rotor plane perpendicular to the wind stream. In passive yaw or free yaw control systems, often used for downwind turbines, the turbine is allowed to follow the direction of the wind as the wind direction changes. In the latter case, the yaw system is usually very simple, and in many cases only includes a yaw bearing. However simple in design, passive yaw systems need to be designed such that the nacelle responds to a sudden change in wind direction with a yaw movement that is not too fast or abrupt. If this issue is not tended to properly, high gyroscopic loads in the blade roots and oscillations of the nacelle can contribute to significant structural stress. During operation in turbulent and gusty winds, a sudden change in wind direction or excessive turbulence or wind shear can also result in large yaw moments and the turbine can yaw unwieldy and hence cut performance.

To reduce or eliminate these problems, the free yaw system should include mechanisms to maintain the yaw rate below an acceptable value determined by the calculation of the gyroscopic loads. Hence, yaw dampers may be installed to reduce the yaw rate sufficiently and modulate the performance and dynamic response of the wind turbine. Hydraulic yaw damping systems have been described elsewhere (e.g., in US 4,674,954), in addition to electro-mechanical systems (*e.g*., used on the Endurance E-3120). Yaw control can also be optimized by architectural aspects of wind turbines, such as a sliding bearing or a tail vane shape on the mainframe of the turbine.

The instability of the yaw degree of freedom is caused by two main factors: a large yaw error (difference between the direction of the nacelle and the direction of the wind), and a large yaw rate (i.e. the speed at which the nacelle is turning). In order to have a more stable system, both negative effects must be counteracted. Therefore, the yaw rate should not fluctuate excessively, and sudden accelerations are to be avoided. At the same time, the yaw control should still allow for ample adjustments to the wind direction, and not block yaw altogether.

An objective of the current invention is, therefore, to provide a downwind turbine which has improved yaw control. An objective of the current invention is to provide a downwind turbine which adapts easily to a change in wind direction, but which nevertheless limits the yaw rate and yaw acceleration. Another objective of the current invention is to provide a downwind turbine which is more efficient. Another objective of the current invention is to provide a downwind turbine which is more robust. Another objective of the current invention is to provide a downwind turbine which is more reliable. Another objective of the current invention is to provide a downwind turbine which is cheaper to construct, install and/or maintain. Another objective of the current invention is to provide a downwind turbine which does not need an external electrical energy source to power auxiliary systems of the turbine.

One or more of these objectives are attained by the invention. One or more of these objectives are attained by preferred embodiments of the invention.

The documents DE 10212467 A and US 4522564 disclose prior art horizontal-axis downwind turbines.

### SUMMARY OF THE INVENTION

The invention comprises a horizontal-axis downwind turbine (100) featuring an extremely effective yaw system, which particularly shows improved passive yaw control. The effectiveness of the yaw system is the result of a combination of features, whereby the selective combination results in an increase in effectiveness of the yaw system that is larger than the mere additive values of the individual components.

The invention comprises a horizontal-axis downwind turbine (100), comprising a nacelle (150) having a rotor (130) comprising a hub and at least one blade (132), which nacelle (150) is suitable for revolute attachment to a tower (140) thereby defining a rotational axis (151) about which the nacelle (150) yaws, said turbine (100) further comprising:
- a hub integrated generator (120); and
- a yaw damper (110);
wherein the yaw damper (110) comprises a permanent-magnet generator (112), and the blade (132) is swept.

The hub integrated generator (120) may be placed away from the rotational axis (151) of the nacelle (150), thereby increasing the moment of inertia of rotation of the nacelle (150) around the rotational axis (151).

The hub integrated generator (120) may be coupled to the rotor (130) through a direct drive connection.

The at least one swept blade (132) may be at a coning angle (135) with respect to a plane perpendicular to the rotational axis (131) of the rotor (130).

The at least one swept blade (132) may be flexible.

The permanent-magnet generator (112) may power auxiliary systems of the turbine (100).

The yaw damper (110) may further comprise a hydraulic damper, a pneumatic damper, an electric damper, and/or a friction damper.

The yaw damper (110) may further comprise a teethed gear and/or a gearbox.

The yaw damper (110) may further comprise a safety brake.

The horizontal-axis downwind turbine (100) as described above may further comprise the turbine tower (140).

Another embodiment of the invention concerns a method for optimizing passive free yaw control of downwind turbines (100), said method comprising the steps:
- employing a yaw damper (110), wherein the yaw damper (110) comprises a permanent-magnet generator (150);
- employing a hub integrated generator (120);
- employing a rotor (130), which comprises at least one swept blade (132)

The method for optimizing free yaw control of downwind turbines (100) as described above may further comprise:
- employing a hub integrated generator (120) that is placed away from the rotational axis (151) of the nacelle (150),
thereby increasing the moment of inertia of rotation of the nacelle (150) around the rotational axis (151).

The method for optimizing free yaw control of downwind turbines (100) as described above may further comprise:
- employing a direct drive connection to couple the hub integrated generator (120) with the rotor (130).

The method for optimizing free yaw control of downwind turbines (100) as described above may further comprise:
- employing a rotor (130), which comprises at least one swept blade (132) that is at a coning angle (135) with respect to the plane perpendicular to the rotational axis (131) of the rotor (130).

The method for optimizing free yaw control of downwind turbines (100) as described above may further comprise:
- employing the permanent-magnet generator (112) to power auxiliary systems of the turbine (100).

### FIGURE LEGENDS

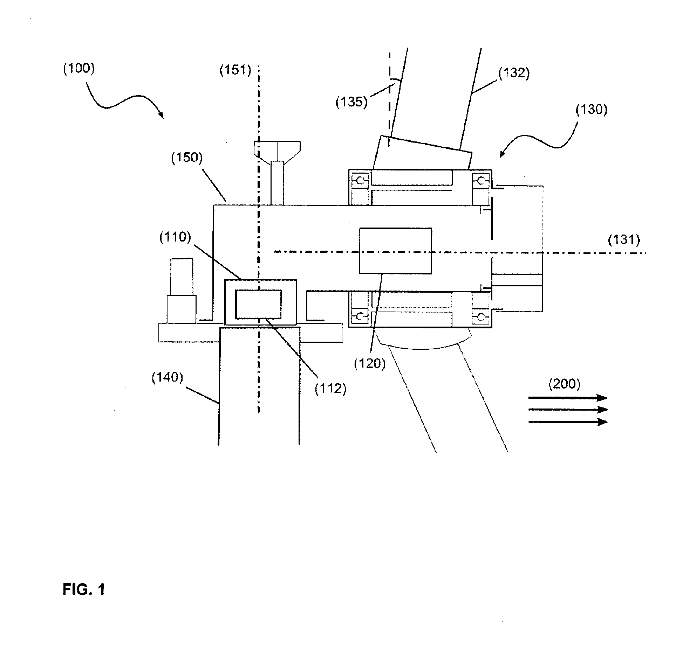

**FIG. 1** illustrates the location of a permanent magnet-based yaw damper (110) on the rotational axis (151) of the nacelle (150), and the location of a hub-integrated generator (120) on the rotational axis (131) of the rotor (130) but displaced from the rotational axis (151) of the nacelle (150).

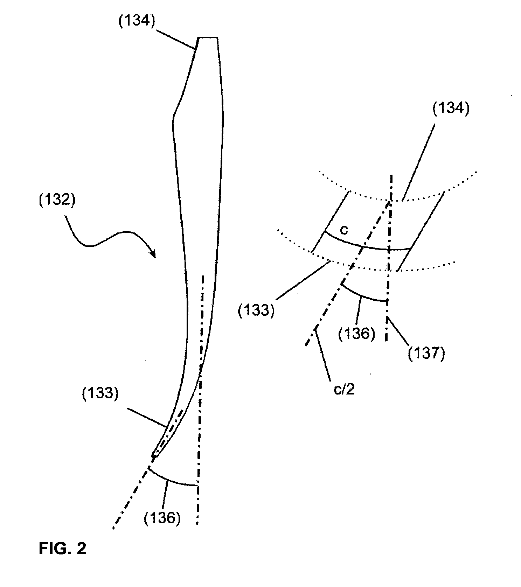

**FIG. 2** illustrates a swept blade (132), showing the tip (133) of the blade (132) and the root (134) of the blade (132). The sweep angle (136) is also shown as being the angle between the c/2 line, defined by the chord line c, and the radial line (137).

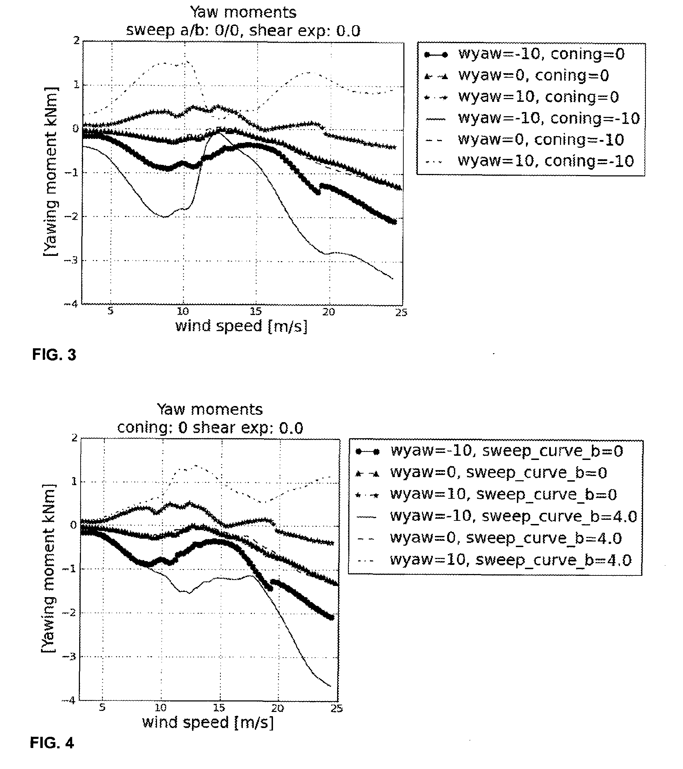

**FIG. 3** illustrates the effect of coning vs. no coning according to an embodiment of the invention. The lines without markers (dash-dot, dashed and solid) indicate results when coning is applied, while similar lines with markers (stars, triangles and circles, respectively) represent the restoring force without coning being applied. The dash-dot line (and star) values represent an angle of incidence of the wind of 10 degrees, while the solid line (and circle) values represent an angle of incidence of the wind of -10 degrees. The dashed line (and triangle) values represent an angle of incidence of the wind of 0 degrees. A higher value for the dash-dot line series (and similarly a lower value for the solid line series) demonstrates a greater tendency of the nacelle (150) to turn with the wind (200) when the wind (200) is not properly aligned with the nacelle (150) (i.e. when the wind (200) is at an angle of incidence with the nacelle (150)).
**FIG. 4** illustrates the effect of sweep vs. no sweep according to an embodiment of the invention. The lines without markers (dash-dot, dashed and solid) indicate results when sweep is applied, while similar lines with markers (stars, triangles and circles, respectively) represent the restoring force without sweep being applied. The dash-dot line (and star) values represent an angle of incidence of the wind of 10 degrees, while the solid line (and circle) values represent an angle of incidence of the wind of -10 degrees. The dashed line (and triangle) values represent an angle of incidence of the wind of 0 degrees. A higher value for the dash-dot line series (and similarly a lower value for the solid line series) demonstrates a greater tendency of the nacelle (150) to turn with the wind (200) when the wind (200) is not properly aligned with the nacelle (150).(*i.e*. when the wind (200) is at an angle of incidence with the nacelle (150)).

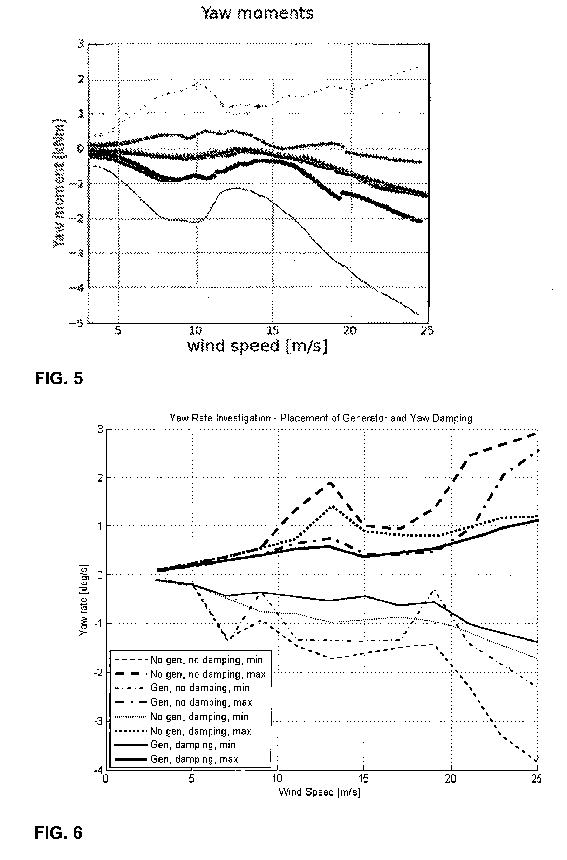

**FIG. 5** illustrates the combined effect of sweep and coning vs. no sweep and no coning according to an embodiment of the invention. The lines without markers (dash-dot, dashed and solid) indicate results when sweep and coning are applied, while similar lines with markers (stars, triangles and circles, respectively) represent the restoring force without sweep and coning being applied. The dash-dot line (and star) values represent an angle of incidence of the wind of 10 degrees, while the solid line (and circle) values represent an angle of incidence of the wind of -10 degrees. The dashed line (and triangle) values represent an angle of incidence of the wind of 0 degrees. A higher value for the dash-dot line series (and similarly a lower value for the solid line series) demonstrates a greater tendency of the nacelle (150) to turn with the wind (200) when the wind (200) is not properly aligned with the nacelle (150) (i.e. when the wind (200) is at an angle of incidence with the nacelle (150)).
**FIG. 6** illustrates the effects of placement of the generator (120) center of mass and yaw damping. The dashed line represents a simulation whereby no yaw damping is applied and the generator (120) is placed in a traditional location: the minimum and maximum yaw rates are shown. The dash-dot line represents a generator (120) whereby the center of gravity is displaced away from the tower (140) and the rotational axis (151) of the nacelle (150) but no yaw damping is applied. The dotted line represents a situation whereby yaw damping is applied, but whereby the generator (120) is placed in a traditional location. Finally, the solid line represents the combined use of both generator (120) placement and yaw damping.

### DETAILED DESCRIPTION OF THE INVENTION

Before the present device of the invention is described, it is to be understood that this invention is not limited to the particular device or combinations therewith, since such device may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

Unless otherwise defined, all terms used in disclosing the invention, including technical and scientific terms, have the meaning as commonly understood by one of ordinary skill in the art to which this invention belongs. By means of further guidance, term definitions may be included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

In the following detailed description of the invention, reference is made to the accompanying drawings that form a part hereof, and in which are shown by way of illustration only of specific embodiments in which the invention may be practiced. It is to be understood that other embodiments may be utilised and structural or logical changes may be made without departing from the scope of the present invention. The following detailed description, therefore, is not to be taken in a limiting sense, and the scope of the present invention is defined by the appended claims.

The invention comprises a downwind turbine (100) featuring an effective yaw system, which particularly shows improved passive yaw control. A preferred embodiment of the invention, showing various components, is shown in Fig. 1. The effectiveness of the yaw system is the result of a combination of features, whereby the selective combination results in an increase in effectiveness of the yaw system. The downwind turbine (100) according to the invention comprises a rotor (130), which is preferably attached at a longitudinal end of a nacelle (150), and which rotor (130) comprises a hub and one or more blades attached to the hub. The blades are preferably evenly distributed around the periphery of the hub. There may be 1, 2, 3, 4 or more blades, preferably 3. In addition, the downwind turbine (100) according to the invention comprises a hub-integrated generator (120), which is empowered by a rotor (130), said rotor (130) comprising at least one swept blade (132). Said downwind turbine (100) is furthermore stabilized by an electro-mechanical yaw damper (110), which comprises a permanent-magnet generator (112). These features all have a necessary contribution to the claimed effectiveness of the passive yaw control. The swept blade or blades (132) improve the wind tracking: as the surface area of a swept blade (132) for the wind to hit is increased, the restoring moment is increased as well, thereby ensuring that the turbine (100) will turn back into the wind. The electro-mechanical yaw damper (110) avoids excessive yaw rates and thus high gyroscopic loads. Furthermore, since the electro-mechanical yaw damper (110) comprises a permanent-magnet generator (112), electrical energy will be generated. This electrical energy may be used to control auxiliary systems of the turbine (100), even during power outages. The hub-integrated generator brings the center of inertia of the turbine drive-train towards the rotor (130) end of the nacelle (150) (the downwind end (200)), away from the rotational axis (151) of the nacelle (150), thereby enhancing the stability of the yaw movement. The combination of these main components in the current invention assures maximal optimization of passive control of the free yaw.

The turbine (100) of an embodiment of the invention comprises an assembly of different robust parts, each of which contribute significantly to the optimization of yaw dynamics. Moreover, the individual components used in the current invention may offer the turbine (100) an increased performance in robustness and reliability, and a decreased cost of fabrication, installation and maintenance.

In an embodiment of the present invention, the downwind turbine (100) features an extremely effective yaw system for optimally regulating the direction of a nacelle (150) of said turbine (100) relative to a tower (140) on which the nacelle (150) may be mounted. In a preferred embodiment of the present invention, the nacelle (150) comprises a horizontal axis (131) system, *i.e.,* when mounted, the axle of the turbine blades (132) is aligned essentially horizontally. The wind turbine tower (140) is preferably longitudinal, and vertically mounted. The wind turbine nacelle (150) may be attached to a wind turbine tower (140) using a revolute (rotatable or yawing) mounting around a rotational axis (151). The tower (140) may be fixed to the ground or to the seabed, or it may be floating on water.

In an embodiment of the present invention, the tower (140) is fixed in such a way to prevent rotation around its longitudinal axis. The nacelle (150), on the other hand, may be able to rotate around a longitudinal axis (151) in order to track the wind direction (200) and keep the rotor (130) perpendicular to the dominating wind flow. The relative motion between the nacelle (150) and the tower (140) is known as the yawing or yaw motion, and is in most cases facilitated by a yaw bearing. In an embodiment, the turbine tower (140) may be at least partially hollow. In an embodiment, the nacelle (150) may be dismountably attached to the tower (140).

In an embodiment of the invention, a permanent magnet generator (112) serves as a damping device (110). A permanent-magnet generator (112) relies on permanent magnets to provide the magnetic field of a rotor to generate electrical power and thus torque. In this application the driving force is the yaw rotation of the wind turbine (100) around the rotational axis (151) of the nacelle (150).

In an embodiment of the current invention, a teethed gear (yaw rim) is fixed on the tower, and a gearbox, coupled via a pinion to the yaw rim, is mounted on the nacelle (150). On the high speed shaft of the gearbox, a permanent magnet generator (112) is mounted and connected to a resistive load to dissipate the unwanted power.

Some of the advantages of using a permanent magnet generator (112), instead of a hydraulic system, may include the elimination of the risk on leaks, the reduction of necessary maintenance, the fact that there is little to no temperature dependency (omitting the need for an expansion tank for the hydraulic fluid) and the possibility to reuse the produced energy to power auxiliary systems of the wind turbine (100).

Concerning the latter advantage, the maximal power (kW) of the permanent magnet generator (112) is around 0.8% of the nominal power of the wind turbine (100). This maximal power may be furthermore dependent upon many parameters such as the site location and the wind conditions. The extra energy produced by the permanent magnet generator (112) can be used to feed auxiliary systems in the wind turbine. Even at low wind speeds the wind direction (200) may still change, and thus the permanent-magnet generators (112) may rotate around the rotational axis (151). This extra power may be sufficient to keep the control system and other systems (such as heating or cooling) alive during grid outages. Nevertheless, as a main purpose, the electromechanical yaw damper (110) avoids excessive yaw rates and thus high gyroscopic loads.

The wind turbine (100) according to the invention also comprises a hub-integrated generator (120). In a preferred embodiment of the invention, the hub-integrated generator (120) brings the center of inertia of the wind turbine drive-train further to the rear (downwind) side (200) and thus contributes to the stability of the yaw movement: with identical yaw moments the yaw acceleration will decrease when the inertia increases. Any other configuration will inevitably have some kind of shaft in the upwind direction (hence the generator mass will be closer to the center of yaw rotation) and thus a lower (yaw) rotational inertia. In a preferred embodiment of the invention, the hub integrated generator (120) is placed away from the rotational axis (151) of the nacelle (150), thereby increasing the moment of inertia of rotation of the nacelle (150) around the rotational axis (151). In a preferred embodiment of the invention, the hub integrated generator (120) is not intersected by the rotational axis (151) of the nacelle (150). In a preferred embodiment of the invention, the hub integrated generator (120) is placed on the rotational axis (131) of the rotor (130).

The invention may make use of a direct drive machine, and hence the efficiency may be higher than the traditional drive train using a gearbox (due to omitting losses in these parts). In direct drive turbines, the generator rotor is directly coupled to the turbine rotor (130), without the traditional gear-box that serves to adapt the low rotor speed to the higher rotating speed of the electric generator. Additionally, such an embodiment also has advantageous consequences on the architecture (and design) of the turbine (100) as a whole. It allows for further simplification of the number of the construction parts, which was already partially accomplished by merely omitting the gear-box. It furthermore allows for the simplification of the architectural design of each of those parts. As such, it decreases material, transport, construction and installation labor and maintenance costs.

Another advantage of certain embodiments of the invention may be a significant reduction of different parts and their connections, making the assembly time short and the risk of failure minimal. In conventional systems, the shaft is subjected to fluctuating torque loads and is prone to mechanical fatigue and failure.

The wind turbine (100) according to the invention also comprises a rotor (130), which comprises at least one swept blade (132). Preferably all the blades (132) are swept. The swept blade (132) comprises a sweep angle (136). Fig. 2 defines the sweep angle (136) as being the angle between the c/2 line, defined by the chord line c of the blade, and the radial line (137). The swept blade (132) may be wholly or partially swept. In a preferred embodiment of the invention, only the tip section (133) of the blade (132) is swept. The swept blade (132) may be forward swept or backward swept. In a preferred embodiment of the invention, the swept blade (132) is backward swept at the tip portion (133), as illustrated in Fig. 2. The swept blade (132) may be unskewed, wholly or partially skewed. Preferably, all the blades (132) are identically swept.

Swept blades (132) may also be used as effective yaw control, as they assist optimal tracking of the wind direction (200). The swept blade is an important feature in stabilizing the yaw degree-of-freedom of a free yaw system. A consequence of the sweep of the blade (132) is an induction of a pitch to feather of the outer portion (e.g. the tip (133)) of the blade (132), due to the geometrical shape of the blade (132). This feathering causes a swept blade (132) to stall at higher wind speeds than an unswept blade, and spreads out the effects of stall radially along the blade (132) as stall is induced later at the tip (133) than at the root (134). Such a dynamic feathering, which is a direct consequence of sweep, therefore, improves static yaw stability.

A swept blade (132) may improve the yaw response of a turbine (100), causing it to improve alignment with the wind. This occurs due to the fact that the swept blade (132) increases the solidity of the rotor (130), and when used in conjunction with a coning angle (135), further enhances the positive effects of the coning angle (135). The decreased effect of the tower (140) shadow due to the swept blade (132) geometry may also avoid non-restoring torque on the yaw system and accordingly may reduce yaw error.

A coning angle (135) also has an effect on yaw stability. As an error in alignment between the wind (200) and the yaw angle of the turbine (100) (or direction of the nacelle (150)) is formed, the coning angle (135) causes the wind to hit the blades (132) on the upwind side of the turbine in a very close to a perpendicular manner. As wind turbine blades (132) are most efficient when the wind hits them in a perpendicular manner, this may result in an increased lift on the upwind side of the turbine (100). As the wind will hit the downwind side (200) of the rotor (130) with an even greater error between wind direction (200) and turbine blade (132), there may be decreased lift on the downwind side (200) of the turbine (100). This causes a moment in yaw, creating the restoring force that restores the turbine (100) into alignment with the wind (200). A swept blade (132) may amplify this effect, as there would be a larger surface area of the blade (132) for the wind to hit on the upwind side, increasing the restoring moment and increasingly ensuring that the turbine (100) will turn back into the wind direction. When these two features (swept blade (132) + coning angle (135)) are combined, they interact with each other: the fact that stall is delayed with a swept blade (132) greatly smoothes out the dip in restoring moment, increasing the overall stability of the system. Also, the swept blade (132) increases rotor (130) solidity, and when this is combined with a coning angle (135), it enhances the effect of coning even further as there is more blade surface for the aerodynamic forces to act upon.

For a downwind turbine (100) as described in the invention, the swept blades (132) of the rotor (130) may be flexible since there is no danger of a tower (140) strike. The flexing blade (132) may have two advantages: they may be less expensive to make and they may relieve stress on the tower (140) during high or gusty wind conditions since the flexing allows some wind load to be transferred directly to the blades (132) instead of the tower (140).

In an embodiment of the invention, the turbine (100) further comprises an anemometer and/or a wind vane.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

### EXAMPLES

The improvement of the yaw system has been confirmed by simulations. In these examples, certain parameters were shown to result in such an improvement: yaw damping (110) and the placement of the generator (120) away from the rotational axis (151) of the nacelle (150). Coning angle (135) and blade sweep also make a contribution. Coning angle (135) and blade sweep primarily induced a larger restoring moment of the turbine (100), which increases the aerodynamic force driving the nacelle (150) to turn with the wind. Placement of the generator (120) mass and yaw damping (130) limited the yaw rate of the turbine (100) (*i.e.* how quickly it turns with the wind), thus reducing the gyroscopic forces acting on the blades (132) of the rotor (130). In addition, the well-chosen placement of the generator (120) mass away from the rotational axis (151) of the nacelle (150) may also limit oscillation of the nacelle (150) by introducing a larger moment of inertia.

With respect to coning angle (132) and blade sweep, the graphs in Fig. 3, Fig. 4 and Fig. 5 illustrate how the two features combined may increase the ability of the turbine (100) to turn itself to align with the wind direction (200). To measure this, a turbine (100) with a fixed yaw system was modeled, and the force acting to turn the turbine (100) into alignment with the wind (200) was measured at difference angles of incidence of the wind. Angles of incidence of 0 (dashed and triangle), +10 (dash-dot and star) and -10 (solid and circle) degrees are shown in Fig. 3, Fig. 4 and Fig. 5, with the unmarked lines representing results when one or both of the features (coning angle (135) and/or swept blades (132)) are included.

The two features act in different ways to achieve the same goal, and thus when combined have supplementary beneficial effects. The coning angle (135) caused the blades (132) on one side of the turbine (100) to be more directly aligned with the flow, whereas the blades (132) on the other side of the turbine (100) are even less aligned with the flow than they would otherwise be. This increases the aerodynamic restoring moment above what it would be without the coning angle (135). Fig. 3 demonstrates that, as the blade (132) that is closest to the wind enters the transition between pre- and post-stall and the lift forces decline slightly, there was a dip in the restoring moment (the dip being at roughly 13 m/s).

A consequence of a sweep of the blade (132) is the induction of a pitch to feather of the outer portion (e.g. the tip (133)) of the blade (132), due to the geometrical shape of the blade (132). This feathering causes the swept blade (132) to stall at higher wind speeds, and to spread out the effects of stall radially along the blade (132), since stall is induced later at the tip (133) of the blade (132) than at the root (134) of the blade (132). Because of this dynamic feathering, a direct consequence of sweep, improved static yaw stability was seen in Fig. 4.

Since stall is delayed with the swept blade (132), this resulted in a significant smoothing out of the dip in restoring moment that is in evidence with the coning-only graph of Fig.3, finally resulting in an increased overall stability of the system, as illustrated in Fig. 5. Additionally, the swept blade (132) increases rotor solidity, and when this is combined with a coning angle (135), it enhances the effect of coning even further as there is more blade surface for the aerodynamic forces to act on.

A reduction both in the yaw rate of the turbine (100) and the instability of the nacelle (150) leads to further optimisation, so that excessive loads on the blades (132) due to the gyroscopic forces that are induced by yawing can be avoided. This may be passively achieved by the selective placement of the center of gravity of the nacelle (150) and by damping out the yaw motion.

The use of a direct drive machine enables the placement of the center of gravity of the generator (120) away from the rotational axis (151) of the nacelle (150), causing the induced inertia to slow down the motion of the nacelle (150). In addition, the direct drive allows the wind turbine (100) to be as light as possible, by excluding a heavy gear box. A hub integrated design according to an embodiment of the invention may further improve this feature by avoiding a heavy shaft. Such a hub-integrated direct drive train may result in the unique advantage of having a light wind turbine (100) (which has a larger tendency to follow the wind even at low wind speeds and therefore a less stable (150)), but at the same time having a turbine (100) which has a large moment of inertia (which in turn results in a lower yaw rate and more stable nacelle (150)) because the weight is placed away from the rotational axis (151) of the nacelle (150). The yaw rate can also be passively reduced by means of a permanent magnet motor and a gear box, thereby allowing the motor to act as a generator (112) rather than a traditional motor.

Both means as described above may, especially when combined according to a preferred embodiment of the invention, limit the rotational speed of the nacelle (150) to an acceptable value. From Fig. 6, it can be seen that the use of a yaw damper (110) had a more smooth effect on the limitation of rotational speed, as it acts on speed directly, whereas the inertia induced by the altered center of gravity impedes any acceleration, which in turn is translated into a more constant speed. However the desired effect would not be obtained using either of these means alone, as either the size and placement of the generator (120) or the size of the yaw damper (110) (and reactive forces it would thus impart to the tower (140)) would become prohibitive. Thanks to the combination according to the invention, an acceptable yaw rate is obtained without any adverse consequences on the surrounding structures.

From these examples, it is clear that the yaw damper (110) and the placement of the generator (120) act to lower and stabilise the yaw rate *(i.e.,* the speed at which the nacelle (150) turns) in the yaw degree of freedom, making the yaw system more stable. The coning angle (135) and the swept blade (132) act to reduce the yaw error of the nacelle (150) (i.e., the difference between the direction of the wind (200) and the direction the nacelle (150) is pointing), thus further increasing the stability of the yaw system. From these examples, it is clear that the selective combination of aforementioned parameters results in improved characteristics for a downwind passive yawing turbine (100), particularly because of the way these parameters interact with each other. This combination makes it possible to avoid the use of a system to actively track the wind, and to avoid a drive system to force the correct orientation (200) of the nacelle (150) with the wind.

## Claims

1. A horizontal-axis downwind turbine (100), comprising a nacelle (150) having a rotor (130) comprising a hub and at least one swept blade (132), which nacelle (150) is suitable for revolute attachment to a tower (140) thereby defining a rotational axis (151) about which the nacelle (150) yaws, said turbine (100) further comprising:
- a hub integrated generator (120); and
- a yaw damper (110); **characterized in that** said
yaw damper (110) comprises a permanent-magnet generator (112).

2. Horizontal-axis downwind turbine (100) according to claim 1, wherein the hub integrated generator (120) is placed away from the rotational axis (151) of the nacelle (150), thereby increasing the moment of inertia of rotation of the nacelle (150) around the rotational axis (151).

3. Horizontal-axis downwind turbine (100) according to claim 1 or 2, wherein the hub integrated generator (120) is coupled to the rotor (130) through a direct drive connection.

4. Horizontal-axis downwind turbine (100) according to any of claims 1 to 3, wherein the at least one swept blade (132) is at a coning angle (135) with respect to a plane perpendicular to the rotational axis (131) of the rotor (130).

5. Horizontal-axis downwind turbine (100) according to any of claims 1 to 4, wherein the at least one swept blade (132) is flexible.

6. Horizontal-axis downwind turbine (100) according to any of claims 1 to 5, wherein the permanent-magnet generator (112) powers auxiliary systems of the turbine (100).

7. Horizontal-axis downwind turbine (100) according to any of claims 1 to 6, wherein the yaw damper (110) further comprises a hydraulic damper, a pneumatic damper, an electric damper, and/or a friction damper.

8. Horizontal-axis downwind turbine (100) according to any of claims 1 to 7, wherein the yaw damper (110) further comprises a teethed gear and/or a gearbox.

9. Horizontal-axis downwind turbine (100) according to any of claims 1 to 8, wherein the yaw damper (110) further comprises a safety brake.

10. Horizontal-axis downwind turbine (100) according to any of claims 1 to 9, further comprising the tower (140).

11. A method for optimizing passive free yaw control of downwind turbines (100), said method comprising the steps:
- employing a yaw damper (110), wherein the yaw damper (110) comprises a permanent-magnet generator (112);
- employing a hub integrated generator (120); and
- employing a rotor (130), which comprises at least one swept blade (132)

12. Method for optimizing free yaw control of downwind turbines (100) according to claim 11, further comprising:
- employing a hub integrated generator (120) that is placed away from the rotational axis (151) of the nacelle (150),
thereby increasing the moment of inertia of rotation of the nacelle (150) around the rotational axis (151).

13. Method for optimizing free yaw control of downwind turbines (100) according to claim 11 or 12, further comprising:
- employing a direct drive connection to couple the hub integrated generator (120) with the rotor (130).

14. Method for optimizing free yaw control of downwind turbines (100) according to any of claims 11 to 13, further comprising:
- employing a rotor (130), which comprises at least one swept blade (132) that is at a coning angle (135) with respect to the plane perpendicular to the rotational axis (131) of the rotor (130).

15. Method for optimizing free yaw control of downwind turbines (100) according to any of claims 11 to 14, further comprising:
- employing the permanent-magnet generator (112) to power auxiliary systems of the turbine (100).

## Patentansprüche

1. Horizontalachsen-Leeläufer (100), welcher eine Gondel (150) mit einem Rotor (130), der eine Nabe und mindestens ein ausgebogenes Blatt (132) aufweist, aufweist, wobei die Gondel (150) zur drehenden Befestigung an einem Turm (140) geeignet ist, wodurch eine Rotationsachse (151) definiert wird, um welche die Gondel (150) giert, wobei die Turbine (100) ferner Folgendes aufweist:
- einen in die Nabe integrierten Generator (120); und
- einen Gierdämpfer (110);
**dadurch gekennzeichnet, dass** der Gierdämpfer (110) einen Dauermagnetgenerator (112) aufweist.

2. Horizontalachsen-Leeläufer (100) nach Anspruch 1, wobei der in die Nabe integrierte Generator (120) von der Rotationsachse (151) der Gondel (150) weg positioniert ist, wodurch das Rotationsträgheitsmoment der Gondel (150) um die Rotationsachse (151) erhöht wird.

3. Horizontalachsen-Leeläufer (100) nach Anspruch 1 oder 2, wobei der in die Nabe integrierte Generator (120) über eine Direktantriebsverbindung mit dem Rotor (130) gekoppelt ist.

4. Horizontalachsen-Leeläufer (100) nach einem der Ansprüche 1 bis 3, wobei sich das mindestens eine ausgebogene Blatt (132) in Bezug auf eine Ebene senkrecht zur Rotationsachse (131) des Rotors (130) in einem Konuswinkel (135) befindet.

5. Horizontalachsen-Leeläufer (100) nach einem der Ansprüche 1 bis 4, wobei das mindestens eine ausgebogene Blatt (132) flexibel ist.

6. Horizontalachsen-Leeläufer (100) nach einem der Ansprüche 1 bis 5, wobei der Dauermagnetgenerator (112) Hilfssysteme der Turbine (100) antreibt.

7. Horizontalachsen-Leeläufer (100) nach einem der Ansprüche 1 bis 6, wobei der Gierdämpfer (110) ferner einen hydraulischen Dämpfer, einen pneumatischen Dämpfer, einen elektrischen Dämpfer und/oder einen Reibungsdämpfer aufweist.

8. Horizontalachsen-Leeläufer (100) nach einem der Ansprüche 1 bis 7, wobei der Gierdämpfer (110) ferner ein Zahnrad und/oder ein Getriebe aufweist.

9. Horizontalachsen-Leeläufer (100) nach einem der Ansprüche 1 bis 8, wobei der Gierdämpfer (110) ferner eine Sicherheitsbremse aufweist.

10. Horizontalachsen-Leeläufer (100) nach einem der Ansprüche 1 bis 9, welcher ferner den Turm (140) aufweist.

11. Verfahren zum Optimieren der passiven freien Giersteuerung von Leeläufern (100), wobei das Verfahren folgende Schritte aufweist:
- Einsetzen eines Gierdämpfers (110), wobei der Gierdämpfer (110) einen Dauermagnetgenerator (112) aufweist;
- Einsetzen eines in die Nabe integrierten Generators (120); und
- Einsetzen eines Rotors (130), welcher mindestens ein ausgebogenes Blatt (132) aufweist.

12. Verfahren zum Optimieren der freien Giersteuerung von Leeläufern (100) nach Anspruch 11, welches ferner Folgendes aufweist:
- Einsetzen eines in die Nabe integrierten Generators (120), der von der Rotationsachse (151) der Gondel (150) weg positioniert ist,
wodurch das Rotationsträgheitsmoment der Gondel (150) um die Rotationsachse (151) erhöht wird.

13. Verfahren zum Optimieren der freien Giersteuerung von Leeläufern (100) nach Anspruch 11 oder 12, welches ferner Folgendes aufweist:
- Einsetzen einer direkten Antriebsverbindung zum Koppeln des in die Nabe integrierten Generators (120) mit dem Rotor (130).

14. Verfahren zum Optimieren der freien Giersteuerung von Leeläufern (100) nach einem der Ansprüche 11 bis 13, welches ferner Folgendes aufweist:
- Einsetzen eines Rotors (130), welcher mindestens ein ausgebogenes Blatt (132) aufweist, das sich in Bezug auf die Ebene senkrecht zur Rotationsachse (131) des Rotors (130) in einem Konuswinkel (135) befindet.

15. Verfahren zum Optimieren der freien Giersteuerung von Leeläufern (100) nach einem der Ansprüche 11 bis 14, welches ferner Folgendes aufweist:
- Einsetzen des Dauermagnetgenerators (112) zum Antreiben von Hilfssystemen der Turbine (100).

## Revendications

1. Turbine sous le vent à axe horizontal (100), comprenant une nacelle (150) ayant un rotor (130) comprenant un moyeu et au moins une pale en flèche (132), laquelle nacelle (150) est appropriée pour être fixée à une tour (140) de manière à pouvoir tourner autour de celle-ci, définissant ainsi un axe de rotation (151) autour duquel la nacelle (150) effectue un mouvement de lacet, ladite turbine (100) comprenant en outre :
- une génératrice intégrée au moyeu (120) ; et
- un amortisseur de lacet (110) ;
**caractérisée en ce que** ledit amortisseur de lacet (110) comprend une génératrice à aimant permanent (112).

2. Turbine sous le vent à axe horizontal (100) selon la revendication 1, dans laquelle la génératrice intégrée au moyeu (120) est placée à l'écart de l'axe de rotation (151) de la nacelle (150), augmentant ainsi le moment d'inertie de rotation de la nacelle (150) autour de l'axe de rotation (151).

3. Turbine sous le vent à axe horizontal (100) selon la revendication 1 ou 2, dans laquelle la génératrice intégrée au moyeu (120) est accouplée au rotor (130) par l'intermédiaire d'une liaison d'entraînement direct.

4. Turbine sous le vent à axe horizontal (100) selon l'une quelconque des revendications 1 à 3, dans laquelle l'au moins une pale en flèche (132) est située suivant un angle de conicité (135) par rapport à un plan perpendiculaire à l'axe de rotation (131) du rotor (130).

5. Turbine sous le vent à axe horizontal (100) selon l'une quelconque des revendications 1 à 4, dans laquelle l'au moins une pale en flèche (132) est flexible.

6. Turbine sous le vent à axe horizontal (100) selon l'une quelconque des revendications 1 à 5, dans laquelle la génératrice à aimant permanent (112) alimente des systèmes auxiliaires de la turbine (100).

7. Turbine sous le vent à axe horizontal (100) selon l'une quelconque des revendications 1 à 6, dans laquelle l'amortisseur de lacet (110) comprend en outre un amortisseur hydraulique, un amortisseur pneumatique, un amortisseur électrique et/ou un amortisseur à friction.

8. Turbine sous le vent à axe horizontal (100) selon l'une quelconque des revendications 1 à 7, dans laquelle l'amortisseur de lacet (110) comprend en outre une roue dentée et/ou une boîte d'engrenages.

9. Turbine sous le vent à axe horizontal (100) selon l'une quelconque des revendications 1 à 8, dans laquelle l'amortisseur de lacet (110) comprend en outre un frein de sécurité.

10. Turbine sous le vent à axe horizontal (100) selon l'une quelconque des revendications 1 à 9, comprenant en outre la tour (140).

11. Procédé d'optimisation de la commande passive de lacet libre de turbines sous le vent (100), ledit procédé comprenant les étapes :
- d'utilisation d'un amortisseur de lacet (110), l'amortisseur de lacet (110) comprenant une génératrice à aimant permanent (112) ;
- d'utilisation d'une génératrice intégrée au moyeu (120) ; et
- d'utilisation d'un rotor (130), lequel comprend au moins une pale en flèche (132).

12. Procédé d'optimisation de la commande de lacet libre de turbines sous le vent (100) selon la revendication 11, comprenant en outre :
- l'utilisation d'une génératrice intégrée au moyeu (120) qui est placée à l'écart de l'axe de rotation (151) de la nacelle (150),
augmentant ainsi le moment d'inertie de rotation de la nacelle (150) autour de l'axe de rotation (151).

13. Procédé d'optimisation de la commande de lacet libre de turbines sous le vent (100) selon la revendication 11 ou 12, comprenant en outre :
- l'utilisation d'une liaison d'entraînement direct pour accoupler la génératrice intégrée au moyeu (120) au rotor (130).

14. Procédé d'optimisation de la commande de lacet libre de turbines sous le vent (100) selon l'une quelconque des revendications 11 à 13, comprenant en outre :
- l'utilisation d'un rotor (130), lequel comprend au moins une pale en flèche (132) qui est située suivant un angle de conicité (135) par rapport au plan perpendiculaire à l'axe de rotation (131) du rotor (130).

15. Procédé d'optimisation de la commande de lacet libre de turbines sous le vent (100) selon l'une quelconque des revendications 11 à 14, comprenant en outre :
- l'utilisation de la génératrice à aimant permanent (112) pour alimenter des systèmes auxiliaires de la turbine (100).
